# EUROPEAN PATENT APPLICATION

(11) **EP 4 765 515 A1**
(43) Date of publication of application: **24.06.2026**
(21) Application number: 25224313.4
(22) Date of filing: 17.12.2025
(51) Int. Cl.: H01R 13/533, H01R 13/506, H01R 13/6595, B60L 3/04, B60R 16/023, H05K 9/00, H01R 12/70, H01R 12/72

(54) **CONNECTOR AND ELECTRIC VEHICLE COMPRISING THE SAME**

(30) Priority: 20.12.2024 CN 202423168675 U
(71) Applicant: Tyco Electronics (Shanghai) Co., Ltd., Pilot Free Trade Zone Shanghai 200131 (CN); Tyco Electronics Technology (SIP) Co., Ltd., Suzhou 215126 (CN)
(72) Inventor: Ding, Pengsheng, Suzhou, 32 215123 (CN); Chen, Rancher, Shanghai, 200233 (CN); Jiang, Kaixuan, Shanghai, 200233 (CN)
(74) Representative: Grünecker Patent- und Rechtsanwälte PartG mbB

(57) **Abstract**

This application discloses a connector and an electric vehicle comprising the same. The connector comprises: a housing provided with a grounding groove for accommodating a grounding component, the grounding groove being provided with a recess along a circumferential direction thereof; and a shielding element partially installed in the housing and provided with a grounding portion extending out of the housing, the grounding portion being provided with a finger along a circumferential direction thereof, wherein the finger is configured to be installed into a corresponding recess, so as to secure the grounding portion to the grounding component, and enable the shielding element to be firmly installed on the housing. In this way, the shielding element is not easily displaced under an external force, thereby meeting high environmental requirements for the shielding element and providing a high vibration resistance property for the shielding element.

## Description

### CROSS-REFERENCE TO RELATED APPLICATION

This application claims the priority of Chinese Application No. 202423168675.5 filed on December 20, 2024 and entitled "Connector and Electric Vehicle comprising the same", the whole disclosure of which are incorporated herein by reference.

### Field of the Disclosure

The present application relates to a connector and an electric vehicle comprising the same.

### Description of the Related Art

A connector is a device for connecting two active devices to transmit current or signals. The connector may simplify the assembly process of electronic products and further simplify the mass production process of electronic products. The connector is easy to repair; if an electronic element fails, the failed element may be quickly replaced in the case that the connector is installed. With the advancement of technology, the electronic element of the electronic product installed with the connector may be updated, and an old electronic element is replaced with a new and better-performance electronic element, which is convenient to upgrade. The connector may improve flexibility of product design when designing and integrating new products and when using electronic elements to form a system. Therefore, the connector is widely used in transportation, medical treatment, aerospace, military, household appliances and other fields.

The basic properties of connectors may be classified into three broad categories: mechanical properties, electrical properties and environmental properties.

An insertion and extraction force and a mechanical life are important mechanical properties. The insertion and extraction force and the mechanical life of the connector are related to a structure of a contact component (a magnitude of a normal pressure), a coating quality (a coefficient of sliding friction) at a contact portion, and a dimensional accuracy (an alignment accuracy) of arrangement of the contact components.

Main electrical properties of the connector comprise a contact resistance, an insulation resistance, and a dielectric strength. The high-quality electrical connector should have a low and stable contact resistance, and the contact resistance of the connector varies from a few milliohms to tens of milliohms. The insulation resistance is an index for measuring the insulation performance between the contact components as well as between the contact components and the housing of the electrical connector, and an order of magnitude of the insulation resistance varies from hundreds of megaohms to thousands of megaohms. The dielectric strength represents an ability to withstand a rated test voltage between the contact components or between the contact components and the housing of the connector.

Environmental properties comprise a temperature resistance property, a moisture resistance property, a salt spray resistance property, a vibration resistance property and an impact resistance property, etc.

The technology development of connectors presents the following characteristics: high speed and digitization of signal transmission, integration of transmission of various types of signal, miniaturization of product volume, low cost of product, module combination, convenience of insertion and extraction, etc.

In the prior art, a shielding element of the connector is designed as a type of ejection contact, a plating layer of the connector is generally tin, a metal housing of the connector is of an aluminum alloy, and this contact design has relatively poor resistance to environmental influences and vibration, resulting in that the shielding element is easily displaced under an external force, which fails to meet high environmental requirements and have high vibration resistance performance.

Therefore, there is an urgent need to provide a connector having a shielding element that meets high environmental requirements and has high vibration resistance performance.

### SUMMARY

The present application aims to solve at least one aspect of the above problems.

According to one aspect of the present application, there is provided a connector comprising: a housing provided with a grounding groove for accommodating a grounding component, the grounding groove being provided with a recess along a circumferential direction thereof; and a shielding element partially installed in the housing and provided with a grounding portion extending out of the housing, the grounding portion being provided with a finger along a circumferential direction thereof, wherein the finger is configured to be installed into a corresponding recess, so as to secure the grounding portion to the grounding component.

According to one aspect of the present application, the grounding groove comprises a first grounding groove; the housing comprises a first housing provided with two accommodating channels extending in a first direction for accommodating terminals, and wherein the first grounding groove is provided in a portion of the first housing that is connected between the two accommodating channels, at a rear end of the first housing along the first direction.

According to one aspect of the present application, the grounding groove further comprises a second grounding groove and a third grounding groove; the housing further comprises a second housing connected to the first housing at the rear end of the first housing, and the second grounding groove and the third grounding groove are respectively provided on two opposite sides of the second housing along a second direction orthogonal to the first direction.

According to one aspect of the present application, each of the accommodating channels is provided with an elastic arm extending from a top wall thereof toward the second housing along the first direction, and the elastic arm is provided with a protrusion.

According to one aspect of the present application, the shielding element comprises: a first installation portion covered by the second housing and comprising a first top wall provided with a first through hole and two first side walls extending from the first top wall and opposite to each other; and a second installation portion covered by the second housing and comprising a second top wall provided with a second through hole and two second side walls extending from the second top wall and opposite to each other, wherein the protrusion is configured to be fitted into each of the first through hole and the second through hole.

According to one aspect of the present application, the grounding portion comprises a first grounding portion, a second grounding portion and a third grounding portion; and the shielding element further comprises: a first arm connected between the first side wall and the second side wall opposite to each other along the second direction, the first grounding portion being provided in the first arm so as to be aligned with the first grounding groove; a second arm extending from the other of the two first side walls away from the second installation portion, the second grounding portion being provided at an end of the second arm so as to be aligned with the second grounding groove; and a third arm extending from the other of the two second side wall away from the first installation portion, the third grounding portion being provided at an end of the third arm so as to be aligned with the third grounding groove.

According to one aspect of the present application, a portion of the second housing covering the second installation portion is provided with a protruding rib extending along the second direction; a portion of the third arm extending along the second direction is provided with a first protruding portion spaced apart from the third grounding portion, and the first protruding portion is configured to abut against an end of the protruding rib; and a portion of the second arm extending along the first direction is provided with a second protruding portion spaced apart from the second grounding portion.

According to one aspect of the present application, the grounding portion is configured as an annular through hole, and the grounding component is configured as a cylindrical sleeve, so that the grounding portion is secured onto the grounding component by a screw.

According to one aspect of the present application, the connector further comprises: a printed circuit board located under the housing and provided with an installation groove which is configured to be aligned with the grounding groove so as to partially secure the grounding component into the printed circuit board.

According to another aspect of the present application, there is provided an electric vehicle comprising the connector according to any of the above aspects.

### BRIEF DESCRIPTION OF THE DRAWINGS

The accompanying drawings, which are incorporated herein and form a part of the specification, illustrate the present application and further serve to explain the principles of the present application together with the description and to enable those skilled in the related art to make and use the embodiments described herein.
FIG. 1 is a perspective view of a connector according to an embodiment of the present application;
FIG. 2 is a perspective view showing a separate shielding element of the connector shown in FIG. 1;
FIG. 3 is a perspective view showing a separate first housing of the connector shown in FIG. 1;
FIG. 4 is a perspective view showing a separate second housing of the connector shown in FIG. 1;
FIG. 5 is a perspective view showing a portion of the second housing shown in FIG. 4 from another viewing angle, showing a protruding rib and a protruding portion;
FIG. 6 is a perspective view showing a shielding element and a grounding component assembled together for the connector shown in FIG. 1; and
FIG. 7 is an exploded view of FIG. 6 showing a top of the grounding component.

Features of the present application will become more apparent from the detailed description set forth below when taken in conjunction with the drawings, wherein similar reference numbers always indicate corresponding elements. In the drawings, similar reference numbers generally indicate identical, functionally similar, and/or structurally similar elements. Unless otherwise stated, the figures provided throughout the present application should not be interpreted as drawings drawn to scale.

### DETAILED DESCRIPTION OF EXEMPLARY EMBODIMENTS

In order to make the objectives, technical solutions, and advantages of the present application clearer, the following further describes the present application in detail with reference to specific embodiments and the accompanying drawings.

However, it should be understood that these descriptions are only exemplary and are not intended to limit the scope of the present application. In the following detailed description, for purposes of explanation, numerous specific details are set forth in order to provide a thorough understanding of the embodiments of the present application. However, it may be evident that one or more embodiments may be practiced without these specific details. In addition, in the following description, descriptions of well-known structures and techniques are omitted to avoid unnecessarily obscuring the concepts of the present application.

The terminology used herein is only for the purpose of describing specific embodiments, and is not intended to be limiting of the present application. The terms "comprise", "include" and the like used herein indicate the existence of the features, steps, operations and/or components, but do not exclude the existence or addition of one or more other features, steps, operations or components.

When an expression such as "at least one of A, B, and C, etc." is used, it should generally be interpreted according to the meaning of the expression commonly understood by those skilled in the art (for example, "a system having at least one of A, B, and C" should be interpreted as comprising but not being limited to a system having A alone; a system having B alone; a system having C alone; a system having A and B; a system having A and C; a system having B and C; and/or a system having A, B, and C).

All terms (comprising technical and scientific terms) used herein have meanings commonly understood by those skilled in the art, unless otherwise defined. It should be noted that the terms used herein should be interpreted as having meanings consistent with the context of this specification, and should not be interpreted in an idealized or overly rigid manner.

The present application discloses a connector 1000 and an electric vehicle (not shown) comprising the connector 1000.

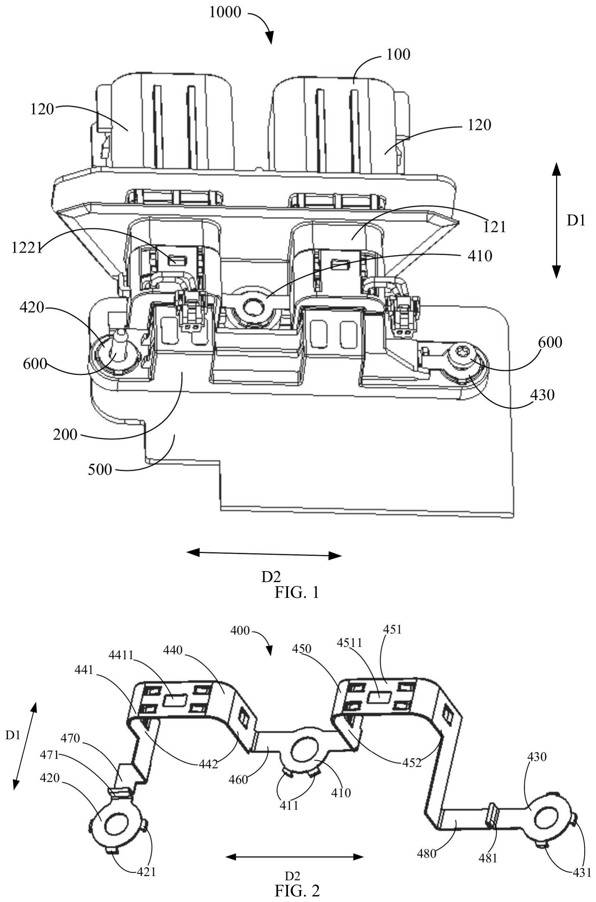

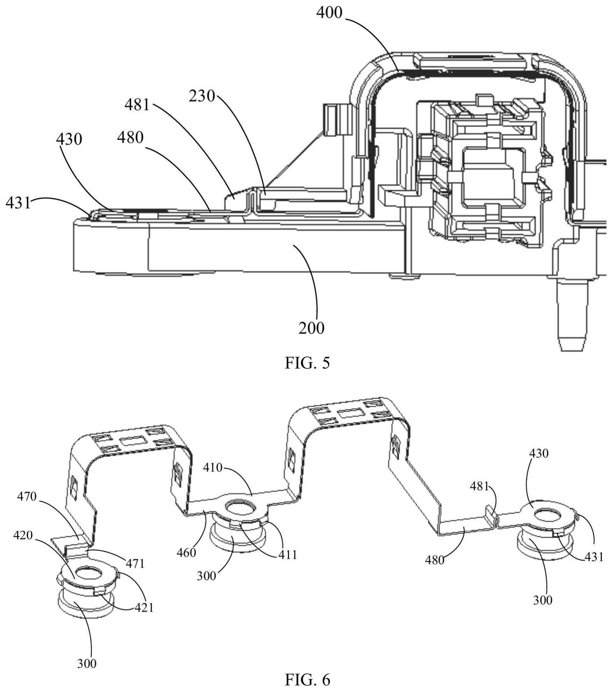

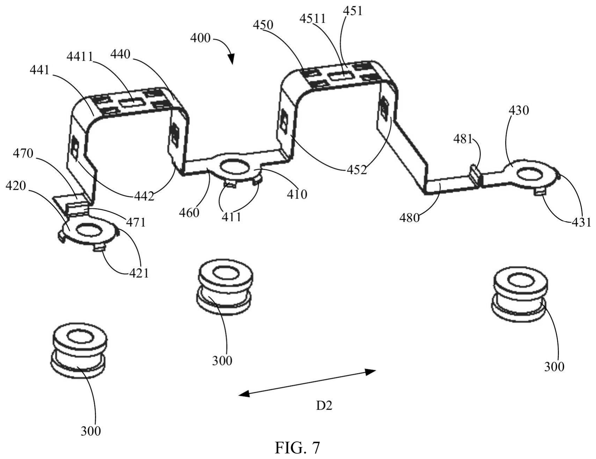

Referring to FIGS. 1-7, the connector 1000 comprises a housing 100, 200 and a shielding element 400. The housing 100, 200 is provided with a grounding groove 110, 210, 220 for accommodating a grounding component 300, and the grounding groove 110, 210, 220 is provided with a recess 111, 211, 221 along a circumferential direction thereof. The shielding element 400 is partially installed in the housing 100, 200 and is provided with a grounding portion 410, 420, 430 extending out of the housing 100, 200. The grounding portion 410, 420, 430 is provided with a finger 411, 421, 431 along a circumferential direction thereof. The finger 411, 421, 431 is configured to be installed into a corresponding recess 111, 211, 221, so as to secure the grounding portion 410, 420, 430 to the grounding component 300 (see FIG. 6) and enable the shielding element 400 to be firmly installed on the housing 100, 200. In this way, the shielding element 400 is not easily displaced under an external force, thereby meeting high environmental requirements for the shielding element 400 and providing a high vibration resistance property for the shielding element 400.

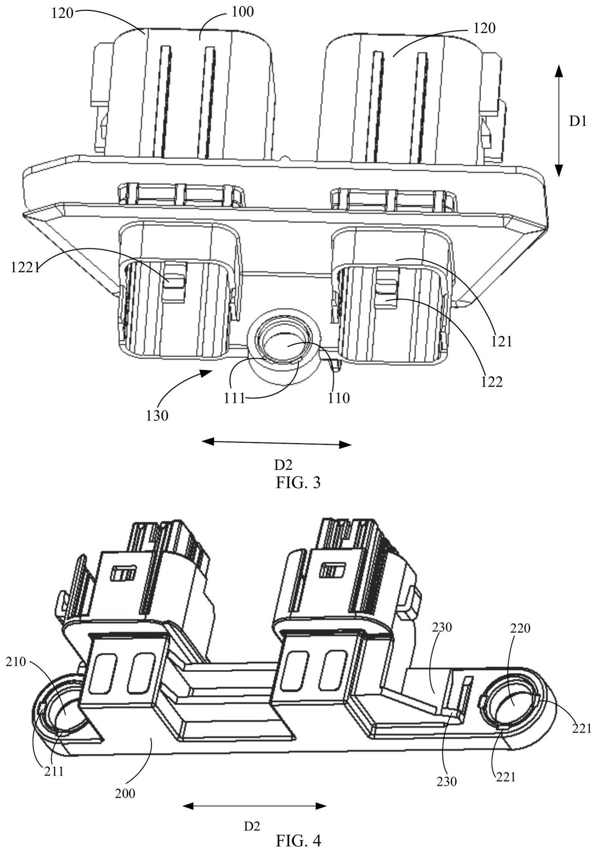

Referring to FIG. 3, the grounding groove 110, 210, 220 comprises a first grounding groove 110. The housing 100, 200 comprises a first housing 100. The first housing 100 is provided with two accommodating channels 120 extending in a first direction D1 for accommodating terminals (not shown). The first grounding groove 110 is provided in a portion of the first housing 100 that is connected between the two accommodating channels 120, at a rear end 130 of the first housing 100 along the first direction D1.

Referring to FIG. 4, the grounding groove 110, 210, 220 further comprises a second grounding groove 210 and a third grounding groove 220. The housing 100, 200 further comprises a second housing 200. The second housing 200 is connected to the first housing 100 at the rear end 130 of the first housing 100. The second grounding groove 210 and the third grounding groove 220 are respectively provided on two opposite sides of the second housing 200 along a second direction D2 orthogonal to the first direction D1.

Referring to FIGS. 1 and 3, each of the two accommodating channels 120 is provided with an elastic arm 122 extending from a top wall 121 thereof toward the second housing 200 along the first direction D1, and the elastic arm 122 is provided with a protrusion 1221 thereon.

Referring to FIG. 2, the shielding element 400 comprises a first installation portion 440 and a second installation portion 450. The first installation portion 440 is covered by the second housing 200, and comprises a first top wall 441 provided with a first through hole 4411 and two first side walls 442 extending from the first top wall 441 and opposite to each other. The second installation portion 450 is covered by the second housing 200, and comprises a second top wall 451 provided with a second through hole 4511 and two second side walls 452 extending from the second top wall 451 and opposite to each other. The protrusion 1221 is configured to be fitted into each of the first through hole 4411 and the second through hole 4511 so as to install the shielding element 400 onto the first housing 100.

Referring to FIGS. 2, 6 and 7, the grounding portion 410, 420, 430 comprises a first grounding portion 410, a second grounding portion 420 and a third grounding portion 430. As described above, the first grounding portion 410 is provided with a first finger 411 along a circumferential direction thereof, and the first finger 411 is configured to be installed into a corresponding first recess 111. The second grounding portion 420 is provided with a second finger 421 along a circumferential direction thereof, and the second finger 421 is configured to be installed into a corresponding second recess 211. The third grounding portion 430 is provided with a third finger 431 along a circumferential direction thereof, and the third finger 431 is configured to be installed into a corresponding third recess 221.

The shielding element 400 also comprises a first arm 460, a second arm 470, and a third arm 480. The first arm 460 is connected between one of the two first side walls 442 and the second side wall 452, which are opposite to each other, along the second direction D2, and the first grounding portion 410 is provided in the first arm 460 so as to be aligned with the first grounding groove 110. The second arm 470 extends from the other of the two first side walls 442 away from the second installation portion 450, and the second grounding portion 420 is provided at an end of the second arm 470 so as to be aligned with the second grounding groove 210. The third arm 480 extends from the other of the two second side walls 452 away from the first installation portion 440, and the third grounding portion 430 is provided at an end of the third arm 480 so as to be aligned with the third grounding groove 220.

A portion of the second housing 200 covering the second installation portion 450 is provided with a protruding rib 230 (see FIG. 5) extending along the second direction D2. A portion of the third arm 480 extending along the second direction D2 is provided with a first protruding portion 481 spaced apart from the third grounding portion 430. The first protruding portion 481 is configured to abut against an end of the protruding rib 230 (see FIG. 5) so as to further secure the shielding element 400 onto the second housing 200. A portion of the second arm 470 extending along the first direction D1 is provided with a second protruding portion 471 spaced apart from the second grounding portion 420 (see FIGS. 2, 6 and 7).

Referring to FIGS. 1, 2, 6 and 7, the grounding portion 410, 420, 430 is configured as an annular through hole, and the grounding component 300 is configured as a cylindrical sleeve which is matched with the annular through hole in terms of shape, so that the grounding portion 410, 420, 430 may be secured onto the grounding component 300 by a screw 600. The arrangement of the first protruding portion 481 and the second protruding portion 471 may reduce or weaken a torque force applied to the entire shielding element 400 when the screw 600 applies a torque, and thus weaken the deformation of the shielding element 400.

Referring to FIG. 1, the connector 1000 further comprises a PCB (printed circuit board) 500. The PCB 500 is located under the housing 100, 200 and is provided with an installation groove (not shown), which is configured to be aligned with the grounding groove 110, 210, 220 so as to partially secure the grounding component 300 into the PCB 500.

So far, the embodiments of the present application have been described in detail with reference to the drawings. It should be noted that the implementations not shown or described in the drawings or the text of the specification are all known to those of ordinary skill in the art and are not described in detail. In addition, the above definition of each of components is not limited to various specific structures, shapes or manners mentioned in the embodiments, and those of ordinary skill in the art may make simple changes or substitutions.

It should also be noted that, in the specific embodiments of the present application, the numerical parameters in this specification and the appended claims are approximate values and may be changed according to the desired characteristics obtained by the content of the present application, unless otherwise specified. In detail, all numbers expressing dimensions, ranges, and so forth used in the specification and the claims are to be understood as being modified in all instances by the term "about." In general, the expressed meaning of numbers is intended to encompass a variation of ± 10% from a specified amount in some embodiments, a variation of ± 5% from a specified amount in some embodiments, a variation of ± 1% from a specified amount in some embodiments, and a variation of ± 0.5% from a specified amount in some embodiments.

Those skilled in the art will appreciate that various combinations and/or assemblies of features recited in the various embodiments and/or claims of the present application may be made, even if such combinations and/or assemblies are not explicitly recited in the present application. In particular, various combinations and/or assemblies of features described in various embodiments and/or claims of the present application may be made without departing from the spirit and teachings of the present application. All such combinations and/or assemblies fall within the scope of the present application.

The specific embodiments described above provide further detailed explanations of the objects, technical solutions, and beneficial effects of the present application. It should be understood that the above description is only the specific embodiments of the present application and is not intended to limit the present application. Any modifications, equivalent substitutions, improvements, etc. made within the spirit and principles of the present application should fall within the protection scope of the present application.

## Claims

1. A connector (1000), **characterized by** comprising:
a housing (100, 200) provided with a grounding groove (110, 210, 220) for accommodating a grounding component (300), the grounding groove (110, 210, 220) being provided with a recess (111, 211, 221) along a circumferential direction thereof; and
a shielding element (400) partially installed in the housing (100, 200) and provided with a grounding portion (410, 420, 430) extending out of the housing (100, 200), the grounding portion (410, 420, 430) being provided with a finger (411, 421, 431) along a circumferential direction thereof,
wherein the finger (411, 421, 431) is configured to be installed into a corresponding recess (111, 211, 221), so as to secure the grounding portion (410, 420, 430) to the grounding component (300).

2. The connector (1000) according to claim 1, **characterized in that**,
the grounding groove (110, 210, 220) comprises a first grounding groove (110);
the housing (100, 200) comprises a first housing (100) provided with two accommodating channels (120) extending in a first direction (D1) for accommodating terminals, and
wherein the first grounding groove (110) is provided in a portion of the first housing (100) that is connected between the two accommodating channels (120), at a rear end (130) of the first housing (100) along the first direction (D1).

3. The connector (1000) according to claim 2, **characterized in that**,
the grounding groove (110, 210, 220) further comprises a second grounding groove (210) and a third grounding groove (220);
the housing (100, 200) further comprises a second housing (200) connected to the first housing (100) at the rear end (130) of the first housing, and
the second grounding groove (210) and the third grounding groove (220) are respectively provided on two opposite sides of the second housing (200) along a second direction (D2) orthogonal to the first direction (D1).

4. The connector (1000) according to claim 3, **characterized in that**,
each of the accommodating channels (120) is provided with an elastic arm (122) extending from a top wall (121) thereof toward the second housing (200) along the first direction (D1), and the elastic arm (122) is provided with a protrusion (1221).

5. The connector (1000) according to claim 4, **characterized in that** the shielding element (400) comprises:
a first installation portion (440) covered by the second housing (200) and comprising a first top wall (441) provided with a first through hole (4411) and two first side walls (442) extending from the first top wall (441) and opposite to each other; and
a second installation portion (450) covered by the second housing (200) and comprising a second top wall (451) provided with a second through hole (4511) and two second side walls (452) extending from the second top wall (451) and opposite to each other,
wherein the protrusion (1221) is configured to be fitted into each of the first through hole (4411) and the second through hole (4511).

6. The connector (1000) according to claim 5, **characterized in that**,
the grounding portion (410, 420, 430) comprises a first grounding portion (410), a second grounding portion (420) and a third grounding portion (430); and
the shielding element (400) further comprises: a first arm (460) connected between the first side wall (442) and the second side wall (452) opposite to each other along the second direction (D2), the first grounding portion (410) being provided in the first arm (460) so as to be aligned with the first grounding groove (110); a second arm (470) extending from the other of the two first side walls (442) away from the second installation portion (450), the second grounding portion (420) being provided at an end of the second arm (470) so as to be aligned with the second grounding groove (210); and a third arm (480) extending from the other of the two second side wall (452) away from the first installation portion (440), the third grounding portion (430) being provided at an end of the third arm (480) so as to be aligned with the third grounding groove (220).

7. The connector (1000) according to claim 6, **characterized in that**,
a portion of the second housing (200) covering the second installation portion (450) is provided with a protruding rib (230) extending along the second direction (D2);
a portion of the third arm (480) extending along the second direction is provided with a first protruding portion (481) spaced apart from the third grounding portion (430), and the first protruding portion (481) is configured to abut against an end of the protruding rib (230); and
a portion of the second arm (470) extending along the first direction is provided with a second protruding portion (471) spaced apart from the second grounding portion (420).

8. The connector (1000) according to any of claims 1 to 7, **characterized in that**,
the grounding portion (410, 420, 430) is configured as an annular through hole, and the grounding component (300) is configured as a cylindrical sleeve, so that the grounding portion (410, 420, 430) is secured onto the grounding component (300) by a screw (600).

9. The connector (1000) according to claim 8, **characterized by** further comprising:
a printed circuit board (500) located under the housing (100, 200) and provided with an installation groove which is configured to be aligned with the grounding groove (110, 210, 220) so as to partially secure the grounding component (300) into the printed circuit board (500).

10. An electric vehicle, **characterized by** comprising the connector (1000) according to any of claims 1 to 9.
